# EUROPEAN PATENT SPECIFICATION

(11) **EP 4 290 123 B1**
(45) Date of publication and mention of the grant of the patent: **29.04.2026**
(21) Application number: 23159830.1
(22) Date of filing: 03.03.2023
(51) Int. Cl.: F21K 9/232, F21K 9/69, F21S 43/14, F21V 5/04, F21V 7/00, G02B 19/00, F21Y 115/10

(54) **OPTICAL ELEMENT, VEHICLE LIGHTING DEVICE, AND VEHICLE LAMP**
OPTISCHES ELEMENT, FAHRZEUGBELEUCHTUNGSVORRICHTUNG UND FAHRZEUGLAMPE
ÉLÉMENT OPTIQUE, DISPOSITIF D'ÉCLAIRAGE DE VÉHICULE ET LAMPE DE VÉHICULE

(30) Priority: 10.06.2022 JP 2022094187; 10.01.2023 JP 2023001944
(43) Date of publication of application: 13.12.2023
(73) Proprietor: Toshiba Lighting & Technology Corporation, Yokosuka-shi Kanagawa 237-8510 (JP)
(72) Inventor: KANAGAWA, Hiroaki, Imabari-shi, Ehime (JP); IKEBE, Shota, Imabari-shi, Ehime (JP); TAKAHASHI, Kazuhiro, Imabari-shi, Ehime (JP); MATSUDA, Yohei, Imabari-shi, Ehime (JP)
(74) Representative: Becker, Eberhard

(56) References cited:
- EP-A1- 2 613 077
- EP-A2- 2 461 082
- US-A1- 2014 321 128
- US-A1- 2016 298 826

## Description

### BACKGROUND

### Technical Field

Embodiments of the disclosure relate to an optical element, a vehicle lighting device, and a vehicle lamp.

### Related Art

Capless wedge base bulbs have been used as vehicle lighting devices. A wedge base bulb is an incandescent bulb. Thus, from the viewpoint of power saving, long service life and the like, wedge base bulbs have come to be replaced with vehicle lighting devices including light emitting elements such as light emitting diodes.

However, the light distribution characteristics and light emitting region of the light emitting element are different from the light distribution characteristics and light emitting region of the wedge base bulb. Thus, when replacing the wedge base bulb with the vehicle lighting device having light emitting elements, it is preferable that the light distribution characteristics and light emitting region of the vehicle lighting device including the light emitting elements are equivalent to the light distribution characteristics and light emitting region of the wedge base bulb.

Thus, it has been desired to develop a technology that makes the light distribution characteristics and light emitting region equivalent to light distribution characteristics and light emitting region of the wedge base bulb.

### Citation List

### Patent literature

[Patent Literature 1] JP 2013-105652 A

US 2014/321128 A1 relates to an optical lens including a first light exit surface, a total internal reflection (TIR) surface, a second light exit surface and a third light exit surface connected in an order, and correspondingly has a first intersection, a second intersection and a third intersection therebetween.

### SUMMARY

### Technical problem

The problem to be solved by the disclosure is to provide an optical element, a vehicle lighting device, and a vehicle lamp whose light distribution characteristics and light emitting region are equivalent to those of a wedge base bulb.

### Solution to Problem

The invention is set out in the appended set of claims. The following disclosure serves a better understanding of the present invention. An optical element of the disclosure is an optical element for a vehicle lighting device including a light emitting element. The optical element is provided in a light emitting side of the light emitting element. The optical element includes a first concave portion provided on an end surface opposite to a light emitting element side, with a dimension in a direction orthogonal to a central axis of the optical element gradually decreasing toward the light emitting element side; and a pair of second concave portions provided on a side surface at point-symmetrical positions centered on the central axis of the optical element. A surface of the second concave portion on a central axis side of the optical element is a curved surface protruding outward. Light emitted from the light emitting element toward an end of the first concave portion on the light emitting element side is emitted at a polar angle of about 0°. Light emitted from the light emitting element toward a region of an inner wall of the first concave portion opposite to the light emitting element side is emitted at a polar angle of about 45°. Light emitted from the light emitting element toward a region of the inner wall of the first concave portion on the light emitting element side is emitted through the curved surface of the second concave portion at a polar angle of about 100°.

A vehicle lighting device according to an embodiment includes: a light emitting element; a first substrate, including a first surface on which the light emitting element is provided and a second surface facing the first surface; a second substrate, provided on the second surface of the first substrate and extending in a direction substantially perpendicular to the second surface; the optical element, provided on a first surface side of the first substrate; and a pair of connection pads, provided on the second substrate and electrically connected to the light emitting element.

A vehicle lamp according to an embodiment includes: the vehicle lighting device; and a socket, including a pair of socket terminals electrically connected to a pair of connection pads provided on the vehicle lighting device.

### Effects

According to the embodiments of the disclosure, it is possible to provide an optical element, a vehicle lighting device, and a vehicle lamp whose light distribution characteristics and light emitting region are equivalent to light distribution characteristics and light emitting region of a wedge base bulb.

### BRIEF DESCRIPTION OF THE DRAWINGS

Figure 1 is a schematic exploded diagram for illustrating a vehicle lighting device according to an embodiment.
Figure 2 is a schematic perspective diagram for illustrating a light emitting portion and a connection portion.
Figure 3 is a schematic diagram of an optical element viewed from the Z direction.
Figure 4 is a schematic diagram of an optical element viewed from the Y direction.
Figure 5 is a cross-sectional diagram of the optical element in Figure 4 taken along line A-A.
Figure 6 is a schematic diagram of an optical element viewed from the X direction.
Figure 7 is a cross-sectional diagram of the optical element in Figure 6 taken along line B-B.
Figure 8 is a cross-sectional diagram of the optical element in Figure 4 taken along line C-C.
Figure 9 is a schematic perspective diagram for illustrating an optical element according to another embodiment.
Figure 10 is a schematic diagram of an optical element viewed from the Z direction.
Figure 11 is a schematic diagram of an optical element viewed from the Y direction.
Figure 12 is a cross-sectional diagram of the optical element in Figure 11 taken along line D-D.
Figure 13 is a schematic diagram of an optical element viewed from the X direction.
Figure 14 is a cross-sectional diagram of the optical element in Figure 13 taken along line E-E.
Figure 15 is a cross-sectional diagram of the optical element in Figure 13 taken along line F-F.
Figure 16 is a cross-sectional diagram of the optical element in Figure 11 taken along line G-G.
Figure 17 is a schematic perspective diagram for illustrating a vehicle lighting device according to another embodiment.
Figure 18 is a schematic perspective diagram of the vehicle lighting device in Figure 17 viewed from the opposite side in the Y direction.
(a) to (c) of Figure 19 are diagrams for illustrating the action of an optical element.
Figure 20 is a schematic diagram for illustrating a vehicle lamp according to this embodiment.

### DESCRIPTION OF THE EMBODIMENTS

Hereinafter, embodiments will be illustrated with reference to the drawings. Moreover, in each drawing, the same reference numerals are given to the same constituent elements, and detailed description thereof will be omitted as appropriate.

Arrows X, Y, and Z in each diagram represent three directions orthogonal to each other. For example, the Z direction is a direction along a central axis of a vehicle lighting device. The X direction is a width direction of the part of the vehicle lighting device that is installed on a socket terminal of a socket. The Y direction is a thickness direction of the part of the vehicle lighting device that is installed on the socket terminal of the socket.

### (Optical elements and vehicle lighting devices)

A vehicle lighting device 1 according to this embodiment is a vehicle lighting device that may be installed on socket terminals 101a and 101b of a socket 101 provided in a vehicle lamp 100. Examples of the vehicle lighting device 1 include those used for room lamps, meter lamps, reading lights, brake lights, direction indicator lights, taillights, etc. provided in automobiles, railway vehicles, and the like. However, the applications of the vehicle lighting device 1 are not limited thereto.

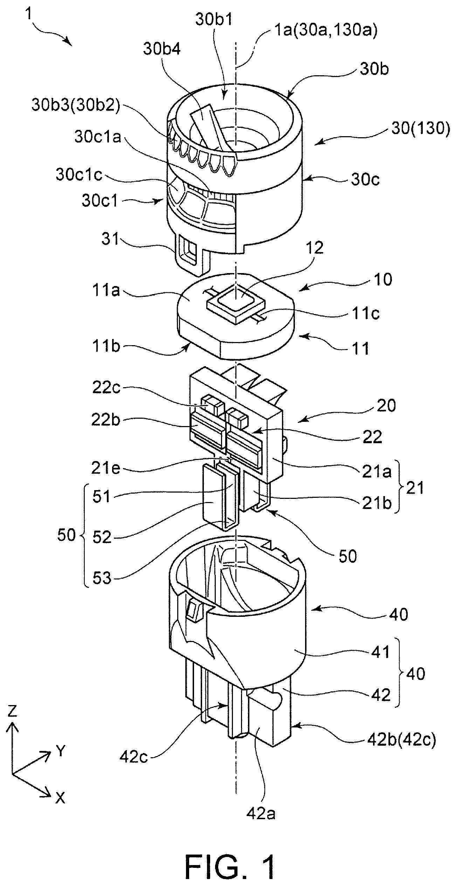

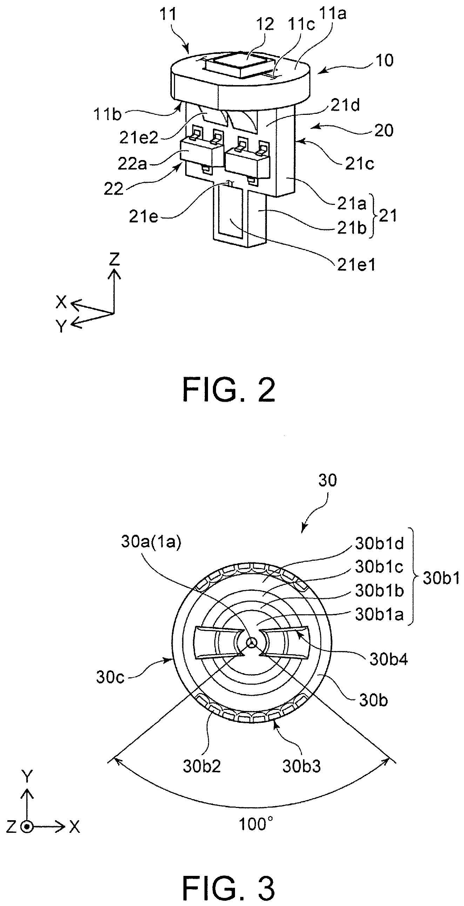

Figure 1 is a schematic exploded diagram for illustrating the vehicle lighting device 1 according to this embodiment. Figure 2 is a schematic perspective diagram for illustrating a light emitting portion 10 and a connection portion 20.

Moreover, Figure 2 illustrates the light emitting portion 10 and the connection portion 20 in Figure 1 viewed from the opposite side in the Y direction.

As shown in Figures 1 and 2, the vehicle lighting device 1 includes, for example, the light emitting portion 10, the connection portion 20, an optical element 30, a housing 40, and terminals 50.

As shown in Figures 1 and 2, the light emitting portion 10 includes, for example, a substrate 11 (corresponding to an example of a first substrate) and a light emitting element 12.

The substrate 11 is provided, for example, at an end of an accommodating portion 41 of the housing 40 on a side opposite to an insertion portion 42 side. The substrate 11 is plate-shaped, for example, and has a surface 11a (corresponding to an example of a first surface) and a surface 11b (corresponding to an example of a second surface) facing the surface 11a. A planar shape of the substrate 11 is, for example, part of a circle containing a center point. However, the planar shape of the substrate 11 is not limited to the illustrated one. The planar shape of the substrate 11 may be, for example, a polygon.

The substrate 11 may be formed from an insulating material. The substrate 11 is made of, for example, an inorganic material such as ceramics (e.g. aluminum oxide or aluminum nitride) or an organic material such as paper phenol or glass epoxy. Moreover, the substrate 11 may be, for example, a metal core substrate in which the surface of a metal plate is coated with an insulating material.

When the amount of heat generated by the light emitting element 12 is large, it is preferable to form the substrate 11 using materials having high thermal conductivity from the viewpoint of heat dissipation. Examples of materials having high thermal conductivity include ceramics such as aluminum oxide and aluminum nitride, high thermal conductive resins, and metal core substrates. The high thermal conductive resin is, for example, a resin such as PET (polyethylene terephthalate) or nylon mixed with a filler using aluminum oxide or the like.

A thickness of the substrate 11 is, for example, about 0.5 mm to 3.0 mm. However, the thickness of the substrate 11 is not limited to the illustrated one and may be changed as appropriate.

A wiring pattern 11c is provided on the surface 11a of the substrate 11. The wiring pattern 11c includes, for example, a mounting pad. A light emitting element 12 is electrically connected to the mounting pad. The wiring pattern 11c is made of, for example, a low resistance metal such as copper, aluminum, or silver.

At least one light emitting element 12 may be provided on the surface 11a of the substrate 11. A center of a light emitting surface of the light emitting element 12 overlaps a central axis 1a of the vehicle lighting device 1.

The light emitting element 12 may be, for example, a light emitting diode, a laser diode, an organic light emitting diode, or the like.

The light emitting element 12 may be, for example, a surface-mounted light emitting element such as a PLCC (Plastic Leaded Chip Carrier) type. Further, the light emitting element 12 may be, for example, a bullet-shaped light emitting element having lead wires. The light emitting element 12 illustrated in Figures 1 and 2 is a surface-mounted light emitting element.

Moreover, the light emitting element 12 may be a chip-shaped light emitting element. The chip-shaped light emitting element may be mounted by COB (Chip On Board), for example. In this case, the surface 11a of the substrate 11 may be provided with the chip-shaped light emitting element; a wiring electrically connecting the chip-shaped light emitting element and the wiring pattern 11c; a frame-shaped member surrounding the chip-shaped light emitting element and the wiring; and a sealing portion that is provided inside the frame-shaped member and that covers the chip-shaped light emitting element and the wiring. Moreover, the sealing portion may include a phosphor. The phosphor may be, for example, a YAG-based phosphor (yttrium-aluminum-garnet-based phosphor). It should be noted that the types of phosphors are not limited to those exemplified. The type of phosphor may be appropriately changed according to the application of the vehicle lighting device 1 so as to obtain a desired emission color.

The light emitting surface of the light emitting element 12 may be substantially parallel to the surface 11a of the substrate 11.

The connection portion 20 includes, for example, a substrate 21 (corresponding to an example of a second substrate) and a circuit component 22.

The substrate 21 includes a wiring pattern 21e electrically connected to the light emitting element 12 and is provided inside the housing 40.

The substrate 21 is, for example, plate-shaped and extends in a direction substantially perpendicular to the surface 11b of the substrate 11. The substrate 21 includes, for example, a mounting portion 21a and an installation portion 21b. The mounting portion 21a and the installation portion 21b may be integrally formed.

When viewed from the Y direction, a shape of the mounting portion 21a may be, for example, square. One end of the mounting portion 21a is provided on the surface 11b of the substrate 11. For example, one end of the mounting portion 21a may be adhered to the surface 11b of the substrate 11. Alternatively, a convex portion may be provided at one end of the mounting portion 21a, and a hole, concave portion, groove, or the like into which the convex portion of the mounting portion 21a is fitted may be provided on the surface 11b of the substrate 11.

A width dimension of the mounting portion 21a may be, for example, about 5.0 mm to 15.0 mm. However, the width dimension of the mounting portion 21a may be appropriately changed according to a size of the substrate 11, the number and size of the circuit components 22, and the like. The width dimension of the mounting portion 21a is the dimension of the mounting portion 21a in the X direction.

A thickness of the mounting portion 21a may be, for example, about 0.1 mm to 3.0 mm. The thickness of the mounting portion 21a is the dimension of the mounting portion 21a in the Y direction.

When viewed from the Y direction, a shape of the installation portion 21b may be, for example, square. One end of the installation portion 21b is provided at the end of the mounting portion 21a on the side opposite to the substrate 11 side. The installation portion 21b extends in the Z direction from the end of the mounting portion 21a on the side opposite to the substrate 11 side.

A width dimension of the installation portion 21b is smaller than the width dimension of the mounting portion 21a. A thickness of the installation portion 21b may be the same as the thickness of the mounting portion 21a.

The installation portion 21b may be provided, for example, in a center of the mounting portion 21a in the X direction.

The material of the substrate 21 (the mounting portion 21a, the installation portion 21b) may be, for example, the same as the material of the substrate 11 described above. Heat generated in the light emitting element 12 is transmitted to the substrate 21 through the substrate 11, for example, and released from the substrate 21 to the outside through the terminal 50 and the like. Thus, considering suppression of temperature rise of the light emitting element 12, it is preferable to form the substrate 21 using a material having high thermal conductivity. Examples of materials having high thermal conductivity include ceramics such as aluminum oxide and aluminum nitride, high thermal conductive resins, and metal core substrates. In this case, the material of the substrate 21 may be the same as or different from that of the substrate 11.

The wiring pattern 21e may be provided on a surface 21c and a surface 21d of the substrate 21 (the mounting portion 21a and the installation portion 21b). The wiring pattern 21e provided on the surface 21c and the wiring pattern 21e provided on the surface 21d may be electrically connected via, for example, a conductive via. The wiring pattern 21e is made of, for example, a low resistance metal such as copper, aluminum, or silver. The wiring pattern 21e is electrically connected to the wiring pattern 11c provided on the substrate 11 through a connection portion 21e2. The connection portion 21e2 may be formed by soldering, for example.

The circuit component 22 is mounted on the wiring pattern 21e provided on the mounting portion 21a. The wiring pattern 21e is electrically connected to a pair of connection pads 21e1 provided on the installation portion 21b. That is, the pair of connection pads 21e1 are provided on the substrate 21 (the installation portion 21b) and electrically connected to the light emitting element 12. The connection pads 21e1 may be formed integrally with the wiring pattern 21e, for example. The connection pads 21e1 are provided on the surface 21c and the surface 21d of the substrate 21 (the installation portion 21b). Each of the pair of connection pads 21e1 is electrically connected to the socket terminals 101a and 101b provided on the socket 101 via the terminal 50. By electrically connecting the socket terminal 101a provided in the socket 101 to one connection pad 21e1 via the terminal 50, the socket terminal 101a may be electrically connected to an electrode of one polarity of the light emitting element 12 via the wiring pattern 21e and the wiring pattern 11c. Further, by electrically connecting the socket terminal 101b to the other connection pad 21e1 via the terminal 50, the socket terminal 101b may be electrically connected to an electrode of the other polarity of the light emitting element 12 via the wiring pattern 21e and the wiring pattern 11c.

Although Figures 1 and 2 illustrate the case where the circuit component 22 is provided on both sides of the mounting portion 21a, the circuit component 22 may be provided on one side of the mounting portion 21a. However, if the circuit component 22 is provided on both sides of the mounting portion 21a, it is possible to reduce the size of the mounting portion 21a and thus the size of the vehicle lighting device 1.

The circuit component 22 may be a passive or active device configured to construct a light emitting circuit having the light emitting element 12.

The circuit component 22 may be, for example, a diode 22a, a resistor 22b, a capacitor 22c, and the like.

However, the type of the circuit component 22 is not limited to the illustrated one, and may be changed as appropriate according to the configuration of the light emitting circuit having the light emitting element 12. For example, in addition to the above component, the circuit component 22 may be a positive temperature coefficient thermistor, a negative temperature coefficient thermistor, a Zener diode, an inductor, a surge absorber, a varistor, a transistor such as an FET or a bipolar transistor, an integrated circuit, an arithmetic element, or the like. The integrated circuit may include, for example, at least one of a flashing circuit, a constant current circuit, and a lighting circuit (drive circuit).

Here, the light emitting element 12 such as a light emitting diode has a polarity. Thus, a diode may be provided to prevent a reverse voltage from being applied to the light emitting element 12. In this case, when the vehicle lighting device 1 is installed on the socket 101 of the vehicle lamp 100, if there is no directivity, the installation operation of the vehicle lighting device 1 becomes easy.

For example, if a bridge circuit (bridge diode) is configured using four diodes, the vehicle lighting device 1 may be provided with a non-polar circuit. The diode 22a illustrated in Figure 2 is a so-called dual-element diode. If the diode 22a is a dual-element diode, a bridge circuit may be configured using two diodes 22a, so the mounting area can be reduced.

The resistor 22b may be, for example, a surface-mounted resistor, a resistor having lead wires (metal oxide film resistor), or a film-like resistor formed using a screen printing method or the like. Note that the resistor 22b illustrated in Figure 1 is a surface-mounted resistor. If it is a surface-mounted resistor, the mounting area can be reduced.

Here, since the forward voltage characteristics of the light emitting element 12 vary, if the voltage applied between an anode terminal and a ground terminal is constant, variations occur in the brightness of the light emitted from the light emitting element 12 (luminous flux, luminance, luminous intensity, and illuminance). Thus, the resistor 22b connected in series with the light emitting element 12 keeps the value of the current flowing through the light emitting element 12 within a predetermined range such that the brightness of the light emitted from the light emitting element 12 is within a predetermined range. In this case, by changing a resistance value of the resistor 22b, the value of the current flowing through the light emitting element 12 may be kept within a predetermined range.

For example, if the resistor 22b is a surface-mounted resistor or a resistor having lead wires, the resistor 22b having an appropriate resistance value is selected according to the forward voltage characteristics of the light emitting element 12. For example, if the resistor 22b is a film-like resistor, the resistance value may be increased by removing part of the film-like resistor.

Moreover, the resistor 22b may also serve to prevent an excessive current from flowing through the light emitting element 12.

The number, size, arrangement, and the like of the resistors 22b are not limited to those illustrated, and may be appropriately changed according to the number and specifications of the light emitting elements 12.

The capacitor 22c may be provided, for example, as a countermeasure against noise or for smoothing the voltage. The capacitor 22c may be, for example, a surface-mounted capacitor 22c. If it is a surface-mounted capacitor 22c, the mounting area can be reduced.

Moreover, for example, at least part of the circuit component 22 may be provided on the substrate 11.

Further, for example, at least part of the circuit component 22 may be provided in a casing body 102 of the vehicle lamp 100 on which the vehicle lighting device 1 is installed. In this way, the configuration of the vehicle lighting device 1 can be simplified, such that the cost of the vehicle lighting device 1 can be reduced. If the circuit component 22 is provided in the vehicle lighting device 1, it becomes easier to protect the vehicle lighting device 1 and make it multifunctional.

As shown in Figure 1, the optical element 30 may be provided so as to cover the light emitting side of the light emitting portion 10 (the light emitting element 12). For example, the optical element 30 may be provided so as to cover the surface 11a of the substrate 11. For example, a pair of attachment portions 31 may be provided at an end of the optical element 30 on a side of the light emitting portion 10. The optical element 30 is detachably attached to the housing 40 using the pair of attachment portions 31. The optical element 30 may be made of translucent resin such as polycarbonate or acrylic, for example.

The optical element 30 protects the light emitting portion 10 (the light emitting element 12) and controls light distribution characteristics and light emitting region of light emitted from the light emitting element 12.

Details of the optical element 30 will be described later.

The housing 40 includes the accommodating portion 41 and the insertion portion 42. The accommodating portion 41 and the insertion portion 42 may be integrally formed. The housing 40 (the accommodating portion 41, the insertion portion 42) may be made of an insulating material such as resin, for example. The housing 40 may be formed, for example, by injection molding.

The accommodating portion 41 has a cylindrical shape and one end is open. The light emitting portion 10 (the substrate 11) and the connection portion 20 (the substrate 21) are accommodated inside the accommodating portion 41. The substrate 11 may be provided so as to block the opening of the accommodating portion 41. By doing so, it is possible to prevent dust and the like from entering into the accommodating portion 41. Moreover, the posture and position of the substrate 21 may be stabilized. Thus, it is possible to suppress excessive force from acting on the terminal 50.

The insertion portion 42 is plate-shaped and is provided at an end of the accommodating portion 41 opposite to the opening side. The insertion portion 42 is installed on the socket terminals 101a and 101b. A space into which the installation portion 21b of the substrate 21 is inserted is provided inside the insertion portion 42. When viewed from the Y direction, the shape of the insertion portion 42 may be, for example, square.

As shown in Figure 1, a pair of terminals 50 may be provided. The pair of terminals 50 are provided in the thickness direction of the insertion portion 42 at the center of the insertion portion 42 in the X direction (width direction) so as to sandwich the central axis 1a of the vehicle lighting device 1. The pair of terminals 50 are electrically connected to the wiring pattern 21e (the connection pad 21e1) of the substrate 21.

For example, one end side of the pair of terminals 50 is electrically connected to the connection pad 21e1 inside the housing 40. For example, the other end side of the pair of terminals 50 is provided on surfaces 42a and 42b in the thickness direction of the insertion portion 42 outside the housing 40.

The terminal 50 includes a first contact portion 51, a second contact portion 52, and a connection portion 53, for example. The second contact portion 52 faces the first contact portion 51. The first contact portion 51 and the second contact portion 52 extend in the Z direction. One end of the connection portion 53 is connected to the first contact portion 51 and the other end of the connection portion 53 is connected to the second contact portion 52.

The first contact portion 51, the second contact portion 52, and the connection portion 53 are plate-shaped and integrally formed. The terminal 50 is formed from a conductive material. The terminal 50 is made of, for example, metal such as copper alloy or stainless steel.

The first contact portion 51 is provided inside the insertion portion 42. The first contact portion 51 is electrically connected to the connection pad 21e1 provided on the installation portion 21b. For example, the first contact portion 51 may be joined to the connection pad 21e1 using a conductive material. The conductive material is, for example, solder or a conductive adhesive.

The second contact portion 52 is provided on the surfaces 42a and 42b of the insertion portion 42. The second contact portion 52 may be brought into contact with the socket terminals 101a and 101b.

The terminal 50 may be formed, for example, as follows.

First, using a conductive material, a strip-shaped conductive member is joined to the connection pad 21e1. Next, the connection portion 20 to which the strip-shaped conductive member is joined is installed inside the housing 40 (the insertion portion 42). Then, the strip-shaped conductive member is bent to form the terminal 50 having the first contact portion 51, the second contact portion 52, and the connection portion 53. Note that the terminals 50 shown in Figure 1 represent the terminals 50 after being bent.

Alternatively, the terminal 50 may be formed by bending a strip-shaped conductive member, and the formed terminal 50 may be inserted into the insertion portion 42. Then, for example, by applying a paste-like conductive material to the connection pad 21e1 of the installation portion 21b, installing the connection portion 20 inside the housing 40 to which the terminals 50 are attached, and curing the paste-like conductive material, it is also possible to join the first contact portion 51 and the connection pad 21e1.

When the first contact portion 51 and the connection pad 21el are joined together, the electrical connection between the first contact portion 51 and the connection pad 21e1 can be maintained even if vibration caused by running or the like is applied. Moreover, it is possible to prevent the light emitting portion 10 and the connection portion 20 from coming off the housing 40.

Next, the optical element 30 will be further described.

Wedge base bulbs are incandescent bulbs, so they emit light in almost all directions. On the other hand, the light emitting element 12 mainly emits light forward. Thus, the light distribution characteristics and light emitting region of the light emitting element 12 are different from the light distribution characteristics and light emitting region of the wedge base bulb. For example, in the case of the light emitting element 12, the luminous intensity is high in the front (polar angle of 0° to 50°) and the luminous intensity in the rear (polar angle of 90° to 100°) is extremely low.

In a case of replacing the wedge base bulb with the vehicle lighting device 1 including the light emitting element 12, it is preferable that the light distribution characteristics and light emitting region of the vehicle lighting device 1 including the light emitting element 12 are equivalent to the light distribution characteristics and light emitting region of the wedge base bulb.

Thus, the optical element 30 is provided on the light emitting side of the light emitting element 12. The optical element 30 emits part of the incident light in a direction intersecting with the central axis 1a of the vehicle lighting device 1.

Figure 3 is a schematic diagram of the optical element 30 viewed from the Z direction.

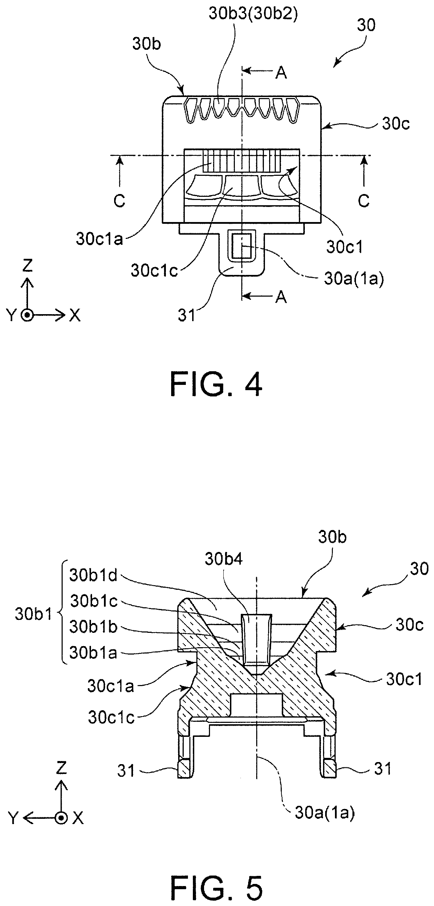

Figure 4 is a schematic diagram of the optical element 30 viewed from the Y direction.

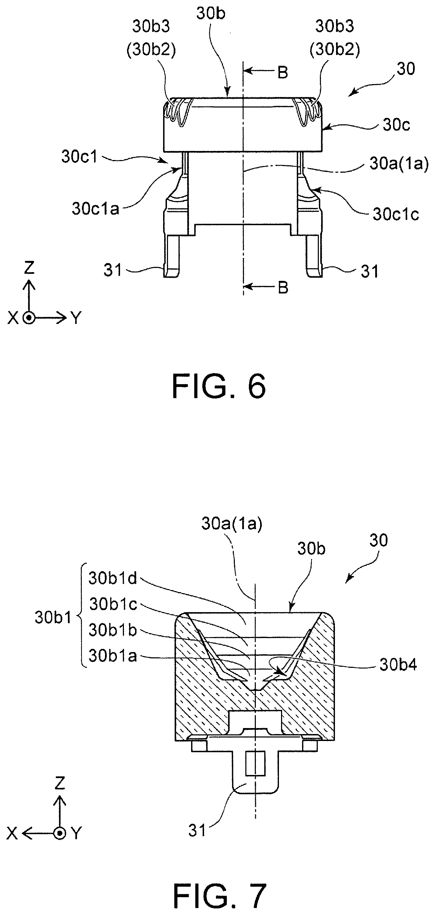

Figure 5 is a cross-sectional diagram of the optical element 30 in Figure 4 taken along line A-A. Figure 6 is a schematic diagram of the optical element 30 viewed from the X direction.

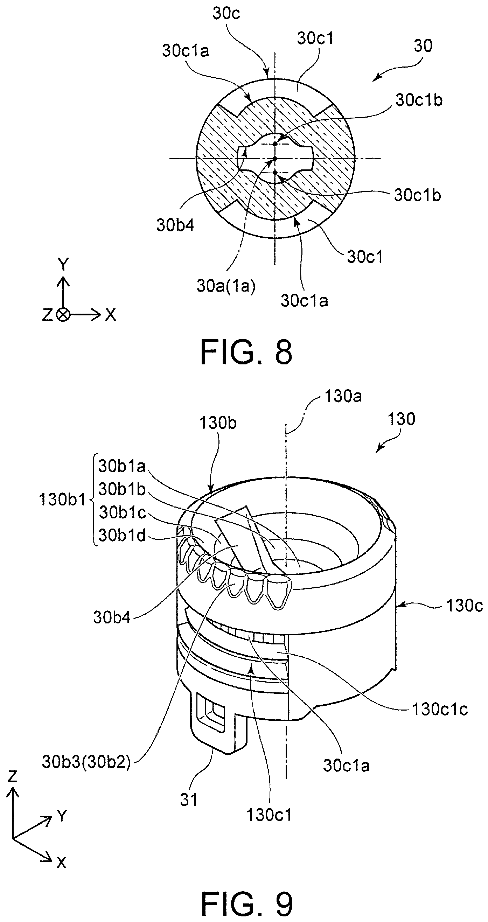

Figure 7 is a cross-sectional diagram of the optical element 30 in Figure 6 taken along line B-B. Figure 8 is a cross-sectional diagram of the optical element 30 in Figure 4 taken along line C-C.

As shown in Figure 1, the appearance of the optical element 30 may have a substantially columnar shape, for example. For example, a central axis 30a of the optical element 30 may substantially overlap the central axis 1a of the vehicle lighting device 1.

As shown in Figures 3, 5, and 7, a concave portion 30b1 (corresponding to an example of a first concave portion) is provided on an end surface 30b of the optical element 30 on the side opposite to the light emitting element 12 side. A central axis of the concave portion 30b1 overlaps the central axis 30a of the optical element 30. A dimension of the concave portion 30b1 in the direction orthogonal to the central axis 30a gradually decreases toward the light emitting element 12 side.

Further, an inner wall of the concave portion 30b1 includes, for example, a region 30b1a, a region 30b1b, a region 30b1c, and a region 30b1d arranged in the Z direction.

The region 30b1a is located on the light emitting element 12 side (bottom side of the concave portion 30b1). An end of the region 30b1a on the light emitting element 12 side may be a flat surface orthogonal to the central axis 30a. A side surface of the region 30b1a is, for example, a curved surface (for example, part of a spherical surface) protruding toward the inside of the optical element 30.

The region 30b1b is positioned between an opening of the concave portion 30b1 and the region 30b1a (on the opening side of the region 30b1a). The region 30b1b is, for example, a curved surface protruding toward the outside of the optical element 30.

The region 30b1c is positioned between the opening of the concave portion 30b1 and the region 30b1b (on the opening side of the region 30b1b). The region 30b1c is, for example, a curved surface protruding toward the outside of the optical element 30.

The region 30b1d is positioned between the opening of the concave portion 30b1 and the region 30b1c (on the opening side of the region 30b1c). The region 30b1d is, for example, a curved surface protruding toward the outside of the optical element 30.

Moreover, a radius of curvature of the curved surface of the region 30b1d is larger than a radius of curvature of the curved surface of the region 30blc. The radius of curvature of the curved surface of the region 30b1c is larger than a radius of curvature of the curved surface of the region 30b1b.

Further, as shown in Figures 3, 5, 7, and 8, a concave portion 30b4 is provided on the inner wall of the concave portion 30b1. The concave portion 30b4 extends, for example, in the X direction. When viewed from the Z direction, the concave portion 30b4 may be rectangular.

As shown in Figures 3, 4, and 6, a pair of regions 30b3 provided with a plurality of concave portions 30b2 (corresponding to an example of third concave portions) are provided on a peripheral edge of the end surface 30b. The pair of regions 30b3 are provided at point-symmetrical positions centered on the central axis 30a. A central angle of the region 30b3 may be 100°, for example.

As shown in Figures 4, 5, 6, and 8, a side surface 30c of the optical element 30 is provided with a pair of concave portions 30c1 (corresponding to an example of second concave portions). The pair of concave portions 30c1 are provided at point-symmetrical positions centered on the central axis 30a.

Further, as shown in Figure 4, the position in the rotation direction of the region 30b3 provided with the plurality of concave portions 30b2 centered on the central axis 30a of the optical element 30 may be the same as the position in the rotation direction of the concave portion 30c1. That is, in the Z direction, the regions 30b3 (the plurality of concave portions 30b2) may be provided above the concave portions 30c1 (on the opening side of the concave portion 30b1).

As shown in Figure 8, a surface 30cla of the concave portion 30cl on the side of the central axis 30a may be a curved surface protruding outward. The surface 30cla may be, for example, part of a cylindrical surface. A center 30c1b of the radius of curvature of the curved surface 30cla is provided at a position not overlapping the central axis 30a. For example, the center 30c1b is provided at a position spaced outward from the central axis 30a.

Further, unevenness for diffusing light may be provided on a surface of the surface 30c1a. The unevenness may be formed by, for example, knurling.

As shown in Figures 4, 5, and 6, inside the concave portion 30cl and below the surface 30cla (on the side opposite to the opening side of the concave portion 30b1), a plurality of concave curved surfaces 30c1c are provided along the surface 30c1a. The concave curved surface 30c1c is inclined in a direction in which the end on the side of the surface 30c1a approaches the central axis 30a.

Next, an optical element 130 according to another embodiment will be illustrated.

The optical element 130 may be provided so as to cover the light emitting side of the light emitting portion 10 (the light emitting element 12), similar to the optical element 30 illustrated in Figure 1. For example, the optical element 130 may be provided to cover the surface 11a of the substrate 11. For example, the pair of attachment portions 31 may be provided at an end of the optical element 130 on the side of the light emitting portion 10. The optical element 130 is detachably attached to the housing 40 using the pair of attachment portions 31. The optical element 130 may be made of translucent resin such as polycarbonate or acrylic, for example. The optical element 130 protects the light emitting portion 10 (the light emitting element 12) and controls the light distribution characteristics and light emitting region of the light emitted from the light emitting element 12.

Figure 9 is a schematic perspective diagram for illustrating the optical element 130.

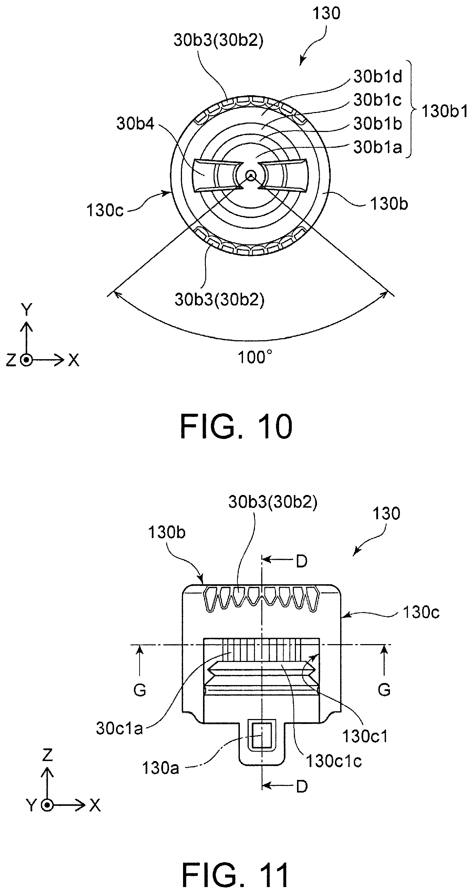

Figure 10 is a schematic diagram of the optical element 130 viewed from the Z direction.

Figure 11 is a schematic diagram of the optical element 130 viewed from the Y direction.

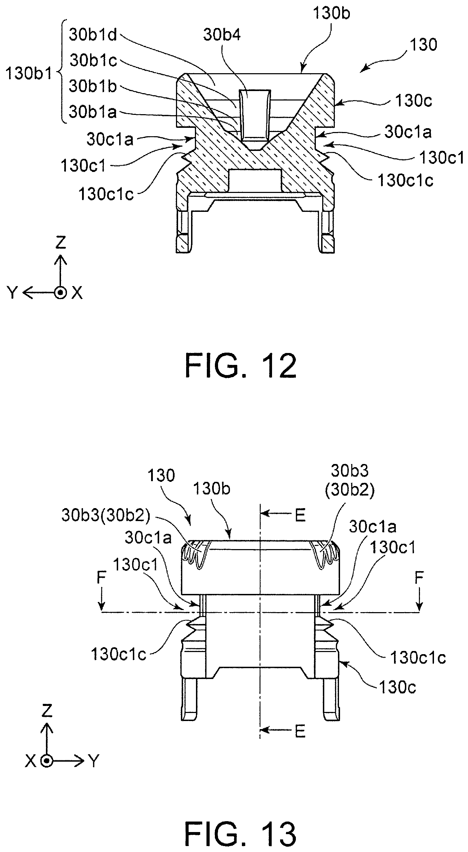

Figure 12 is a cross-sectional diagram of the optical element 130 in Figure 11 taken along line D-D. Figure 13 is a schematic diagram of the optical element 130 viewed from the X direction.

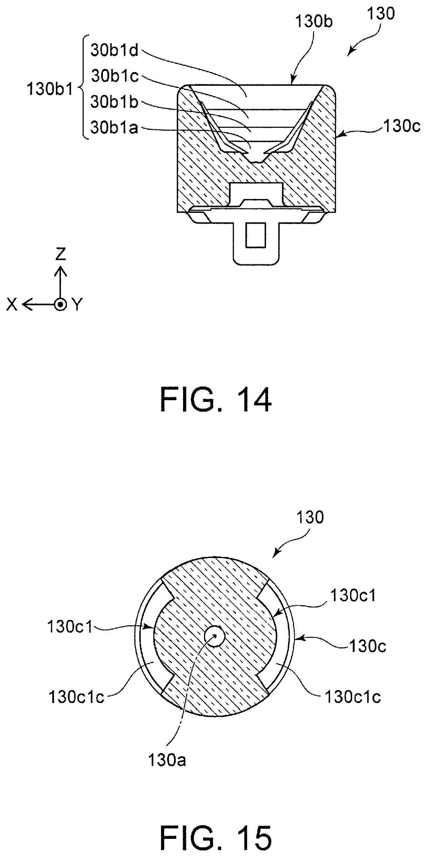

Figure 14 is a cross-sectional diagram of the optical element 130 in Figure 13 taken along line E-E.

Figure 15 is a cross-sectional diagram of the optical element 130 in Figure 13 taken along line F-F.

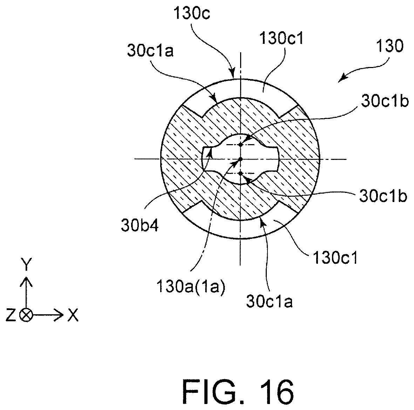

Figure 16 is a cross-sectional diagram of the optical element 130 in Figure 11 taken along line G-G.

As shown in Figure 9, the appearance of the optical element 130 may have a substantially columnar shape, for example. For example, a central axis 130a of the optical element 130 may substantially overlap the central axis 1a of the vehicle lighting device 1.

As shown in Figures 9, 10, 12, and 14, a concave portion 130b1 (corresponding to an example of a first concave portion) is provided on an end surface 130b of the optical element 130 on the side opposite to the light emitting element 12 side. A central axis of the concave portion 130b1 overlaps the central axis 130a of the optical element 130. A dimension of the concave portion 130b1 in the direction orthogonal to the central axis 130a gradually decreases toward the light emitting element 12 side.

Further, similarly to the concave portion 30b1 of the optical element 30 described above, an inner wall of the concave portion 130b1 includes, for example, the region 30bla, the region 30b1b, the region 30b1c, and the region 30b1d arranged in the Z direction.

Further, similarly to the concave portion 30b1 of the optical element 30 described above, the concave portion 30b4 is provided on the inner wall of the concave portion 130b1.

Similar to the end surface 30b of the optical element 30 described above, the pair of regions 30b3 provided with the plurality of concave portions 30b2 (corresponding to an example of third concave portions) are provided on a peripheral edge of the end surface 130b. The pair of regions 30b3 are provided at point-symmetrical positions centered on the central axis 130a. A central angle of the region 30b3 may be 100°, for example.

Similar to the side surface 30c of the optical element 30 described above, a side surface 130c of the optical element 130 is provided with a pair of concave portions 130c1 (corresponding to an example of a second concave portion). The pair of concave portions 130c1 are provided at point-symmetrical positions centered on the central axis 130a.

Further, as shown in Figure 11, the position in the rotation direction of the region 30b3 provided with the plurality of concave portions 30b2 centered on the central axis 130a of the optical element 130 may be the same as the position in the rotation direction of the concave portion 130c1. That is, in the Z direction, the regions 30b3 (the plurality of concave portions 30b2) may be provided above the concave portions 130c1 (on the opening side of the concave portion 130b1).

As shown in Figure 16, the surface 30cla of the concave portion 130cl on the side of the central axis 130a may be a curved surface protruding outward. The surface 30c1a may be, for example, part of a cylindrical surface. The center 30c1b of the radius of curvature of the curved surface 30cla is provided at a position not overlapping the central axis 130a. For example, the center 30c1b is provided at a position spaced outward from the central axis 130a.

Further, unevenness for diffusing light may be provided on a surface of the surface 30c1a. The unevenness may be formed by, for example, knurling.

As shown in Figures 9, 11, 12, 13 and 15, at least one convex portion 130c1c may be provided inside the concave portion 130cl and below the surface 30cla (on the side opposite to the opening side of the concave portion 130b1). As shown in Figures 9, 11, 12, 13, and 15, when a plurality of convex portions 130c1c are provided, the plurality of convex portions 130c1c may be arranged side by side in the Z direction.

In Figures 12, 13 and 15, although a tip of the convex portion 130c1c does not protrude outside the side surface 130c of the optical element 130, it may be positioned at the same position as the outside of the side surface 130c of the optical element 130, or may protrude. When a plurality of convex portions 130clc are provided, positions of tips of the convex portions 130c1c may be the same or different. In this case, it is also possible to control the light distribution characteristics of the light emitted from the light emitting element 12 and the light emitting region by the positions of the tips of the plurality of convex portions 130c1c. For example, as shown in Figures 12 and 13, the tip of the plurality of convex portions 130c1c may be positioned closer to the central axis 130a of the optical element 130 as the convex portions 130c1c are provided higher (on the opening side of the concave portion 30b1). In this way, it becomes easy to make the light distribution characteristics of the light emitted from the light emitting element 12 and the light emitting region within a predetermined range.

As shown in Figure 15, the shape of the convex portion 130c1c when viewed from the Z direction may be part of an annular ring centered on the central axis 130a of the optical element 130.

As shown in Figures 12 and 13, a dimension of the convex portion 130c1c in the Z direction gradually increases from a tip side toward the central axis 130a side of the optical element 130. At least one of the two surfaces of the convex portion 130c1c in the Z direction may be an inclined surface. The inclined surface may be a flat surface or a convex curved surface. However, it may be a curved concave surface. Further, when a plurality of convex portions 130c1c are provided, the lowest convex portion 130c1c (the side opposite to the opening side of the concave portion 130b1) may be provided on an inner wall of the concave portion 130c1 in the Z direction.

The number, size, shape, and position of the tip of the convex portions 130c1c may be appropriately changed according to the light distribution characteristics and the light emitting region required for the vehicle lighting device 1. The number, size, shape, and tip position of the convex portions 130c1c may be appropriately determined by conducting experiments and simulations, for example.

In the above, the case where the optical element 30 (130) is provided in a vehicle lighting device including the light emitting portion 10, the connection portion 20, the housing 40, and the terminals 50 is illustrated. However, the optical element 30 (130) may also be provided in a vehicle lighting device that does not include the housing 40 and the terminals 50.

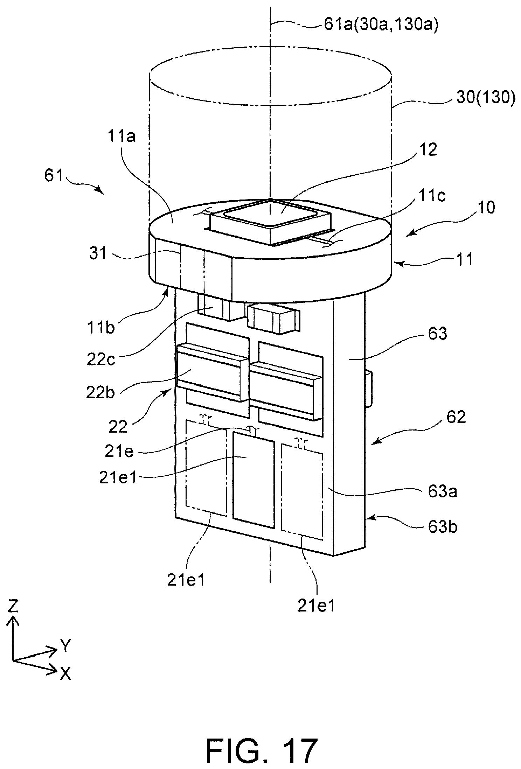

Figure 17 is a schematic perspective diagram for illustrating a vehicle lighting device 61 according to another embodiment.

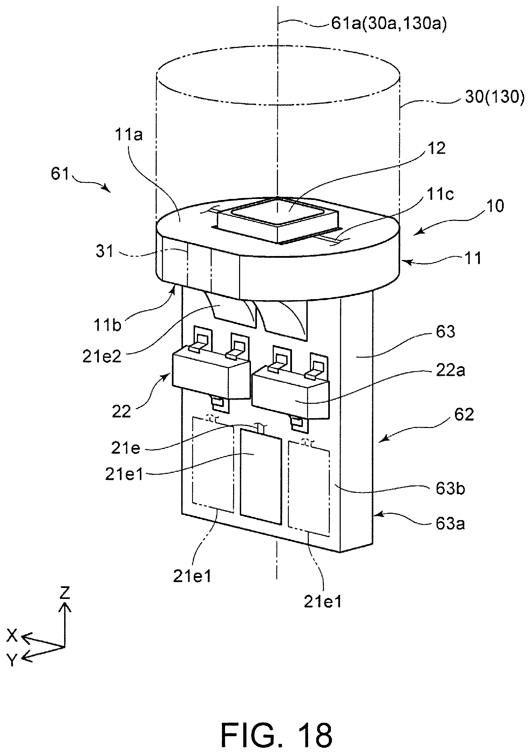

Figure 18 is a schematic perspective diagram of the vehicle lighting device 61 in Figure 17 viewed from the opposite side in the Y direction.

As shown in Figures 17 and 18, the vehicle lighting device 61 is provided with, for example, the light emitting portion 10, a connection portion 62, and the optical element 30 (130).

The connection portion 62 includes, for example, a substrate 63 and the circuit component 22.

The substrate 63 is, for example, plate-shaped and extends in a direction substantially perpendicular to the surface 11b of the substrate 11. When viewed from the Y direction, the shape of the substrate 63 may be rectangular, for example. One end of the substrate 63 is provided on the surface 11b of the substrate 11. For example, one end of the substrate 63 may be adhered to the surface 11b of the substrate 11. Alternatively, a convex portion may be provided at one end of the substrate 63, and a hole, concave portion, groove, or the like into which the convex portion of the substrate 63 is fitted may be provided on the surface 11b of the substrate 11. The dimension and material of the substrate 63 may be, for example, the same as those of the substrate 21 described above.

Similarly to the substrate 21 described above, the wiring pattern 21e may be provided on a surface 63a and a surface 63b of the substrate 63. The wiring pattern 21e provided on the surface 63a and the wiring pattern 21e provided on the surface 63b may be electrically connected via, for example, a conductive via. The wiring pattern 21e is electrically connected to the wiring pattern 11c provided on the substrate 11 through the connection portion 21e2. The connection portion 21e2 may be formed by soldering, for example.

Similarly to the substrate 21 described above, the circuit component 22 is mounted on the wiring pattern 21e. Although the circuit component 22 is provided on both sides of the substrate 63 as an example, the circuit component 22 may be provided on one side of the substrate 63. However, if the circuit component 22 is provided on both sides of the substrate 63, it is possible to reduce the size of the substrate 63 and thus the size of the vehicle lighting device 61.

Moreover, similarly to the substrate 21 described above, the wiring pattern 21e is electrically connected to the pair of connection pads 21e1 provided on the substrate 63. The pair of connection pads 21e1 may be formed integrally with the wiring pattern 21e, for example. The connection pads 21e1 are provided on the surface 63a and the surface 63b of the substrate 63. Each of the pair of connection pads 21e1 is electrically directly connected to the socket terminals 101a and 101b provided on the socket 101.

The arrangement of the pair of connection pads 21el may be the same as that of the substrate 21 described above. For example, the pair of connection pads 21e1 face each other. The pair of connection pads 21e1 are provided in the thickness direction (Y direction) of the substrate 63 at the center of the substrate 63 in the width direction (X direction) so as to sandwich a central axis 61a of the vehicle lighting device 61. In the width direction (X direction) of the substrate 63, the connection pad 21e1 provided on the surface 63a is provided in a center of the surface 63a. In the width direction of the substrate 63, the connection pad 21e1 provided on the surface 63b is provided in a center of the surface 63b.

The pair of connection pads 21e1 may also be provided side by side on the surface 63a of the substrate 63 in the width direction (X direction) of the substrate 63. In this case, the pair of connection pads 21e1 may be provided at linear-symmetrical positions that are symmetrical about a center line in the width direction (X direction) of the substrate 63 as an axis of symmetry. The pair of connection pads 21e1 may be provided at the same position as a pair of lead wires provided at the wedge base bulb. Although the case where the pair of connection pads 21e1 are provided on the surface 63a of the substrate 63 has been described, the pair of connection pads 21el may be provided in the surface 63b of the substrate 63 or may be provided on the surface 63a and the surface 63b of the substrate 63.

If the pair of connection pads 21e1 are provided at the same position as the pair of lead wires provided in the wedge base bulb, the vehicle lighting device 61 may be installed on the socket to which the wedge base bulb is installed. In other words, the socket can be used for multiple purposes.

On the other hand, the lighting circuit for the wedge base bulb differs in configuration from the lighting circuit for the vehicle lighting device having a light emitting element. Thus, when a vehicle lighting device including a light emitting element is mistakenly installed on the socket of the wedge base bulb, current may flow from the lighting circuit of the wedge base bulb to the light emitting element, causing the light emitting element to malfunction.

In this case, in the vehicle lighting device 1 described above, the pair of terminals 50 are provided in the thickness direction of the insertion portion 42 at the center of the insertion portion 42 in the width direction so as to sandwich the central axis 1a of the vehicle lighting device 1. That is, the pair of terminals 50 are provided at positions different from the pair of lead wires provided on the wedge base bulb.

Moreover, in the vehicle lighting device 61, if the pair of connection pads 21e1 are provided in the thickness direction of the substrate 63 at the center in the width direction of the substrate 63, with the central axis 61a of the vehicle lighting device 61 sandwiched therebetween, the pair of connection pads 21e1 are provided at positions different from the pair of lead wires provided on the wedge base bulb.

If the pair of terminals 50 and the pair of connection pads 2lel are provided at positions different from the pair of lead wires provided on the wedge base bulb, even if the vehicle lighting device 1, 61 including the light emitting element 12 are mistakenly installed on the socket of the wedge base bulb, it is possible to suppress the flow of current from the lighting circuit of the wedge base bulb to the light emitting element 12. Thus, it is possible to suppress the failure of the light emitting element 12.

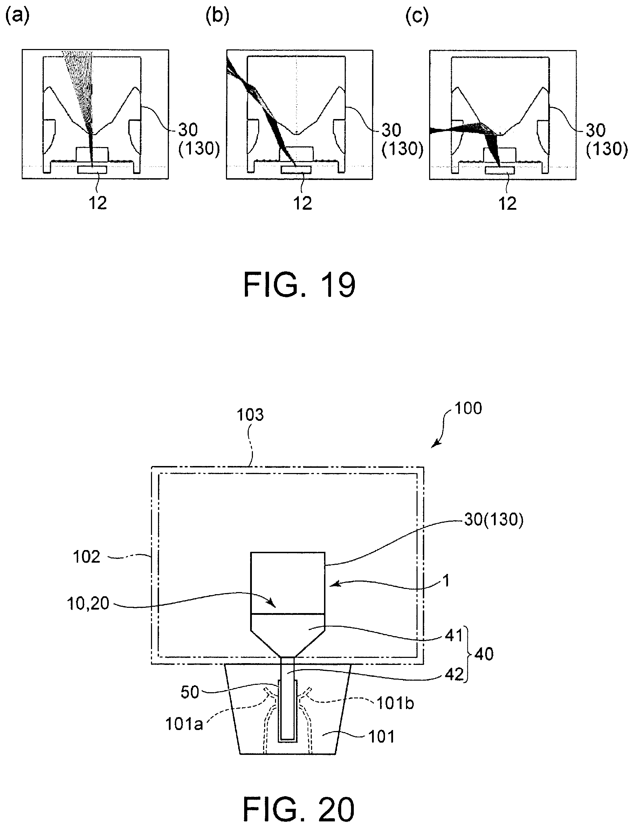

(a) to (c) of Figure 19 are diagrams for illustrating the action of the optical element 30 (130). As shown in (a) of Figure 19, the light emitted from the light emitting element 12 toward the end of the region 30b1a of the concave portion 30b1 passes through the end of the region 30bla and is emitted at a polar angle of about 0°. Since the end of the region 30bla is a flat surface, the incident light may be efficiently transmitted. Moreover, since the area of the end of the region 30bla is small, it is possible to suppress an increase in the luminous intensity of the light emitted at a polar angle of about 0°.

As shown in (b) of Figure 19, the light emitted from the light emitting element 12 toward the regions (the region 30b1b, the region 30b1c, and the region 30b1d) of the inner wall of the concave portion 30b1 on the opposite side of the light emitting element 12 side is reflected by the inner wall of the concave portion 30b1, and is emitted at a polar angle of about 45°. As described above, the radius of curvature of the curved surface of the region 30b1d is larger than the radius of curvature of the curved surface of the region 30b1c, and the radius of curvature of the curved surface of the region 30b1c is larger than the radius of curvature of the curved surface of the region 30b1b. Thus, it is possible to align the reflection directions of the light incident on the region 30b1b, the region 30b1c, and the region 30b1d to some extent. As a result, the luminous intensity of the light emitted at a polar angle of about 45° can be increased.

As shown in (c) of Figure 19, the light emitted from the light emitting element 12 toward the region of the light emitting element 12 side (side portion of the region 30b1a) of the inner wall of the concave portion 30b1 is reflected by the side portion of the region 30bla and incident on the surface 30c1a of the concave portion 30cl (130c1). The light incident on the surface 30cla of the concave portion 30c1 (130c1) is emitted at a polar angle of about 100°. At this time, light is collected by the surface 30c1a. Thus, the luminous intensity of the light emitted at a polar angle of 100° can be increased.

If the optical element 30 (130) is provided, since light may be efficiently emitted in a range of -100° to 100° polar angle, the light distribution characteristics and light emitting region of the vehicle lighting device 1 can be made equivalent to light distribution characteristics and light emitting region of a wedge base bulb.

### (vehicle lamp)

In one embodiment of the disclosure, the vehicle lamp 100 including the vehicle lighting device 1 may be provided. Both the above-described description of the vehicle lighting device 1 and modifications of the vehicle lighting device 1 (for example, the vehicle lighting device 61) may be applied to the vehicle lamp 100.

Figure 20 is a schematic diagram for illustrating the vehicle lamp 100 according to this embodiment.

Moreover, in the following, as an example, a case where the one vehicle lighting device 1 mentioned above is provided is illustrated, but it is sufficient if at least one vehicle lighting device 1 is provided. Further, at least one vehicle lighting device 61 may be provided, or the vehicle lighting device 1 and the vehicle lighting device 61 may be provided.

As shown in Figure 20, the vehicle lamp 100 may be provided with, for example, the vehicle lighting device 1, the socket 101, the casing body 102, and a cover 103.

The socket 101 may be provided at the casing body 102. The insertion portion 42 of the housing 40 provided in the vehicle lighting device 1 is inserted into the socket 101. The socket 101 is made of, for example, an insulating material such as resin.

Moreover, in Figure 20, although a case where the socket 101 and the casing body 102 are separately provided is illustrated, the socket 101 and the casing body 102 may be integrally formed.

The socket 101 may be provided with a concave portion opening at one end. The vehicle lighting device 1 (the insertion portion 42) is inserted into the concave portion. Further, the socket terminal 101a corresponding to one voltage polarity (e.g. plus) and the socket terminal 101b corresponding to the other voltage polarity (e.g. minus) may be provided inside the concave portion. As described above, as long as the vehicle lighting device 1 is provided with a non-polar circuit, the installation direction of the vehicle lighting device 1 (the insertion portion 42) is not limited.

The socket terminals 101a and 101b are elastically deformable. When the insertion portion 42 is inserted into the concave portion, the socket terminals 101a and 101b are electrically connected to the terminals 50, respectively.

The lighting circuit or the like provided outside the vehicle lamp 100 may be electrically connected to the socket terminals 101a and 101b. Moreover, the lighting circuit may be provided on at least one of the inside and the outer surface of the casing body 102.

The shape of the casing body 102 may be, for example, a box shape with one end side open. The casing body 102 is made of, for example, resin that does not transmit light.

The cover 103 may be provided so as to close the opening of the casing body 102. The cover 103 may be made of a translucent resin or the like. The cover 103 may have a function such as a lens, or may suppress glare. Further, the cover 103 may be provided on the casing body 102 so as to be openable and closable, or may be provided so as to be detachable.

Moreover, optical elements such as a reflector and a lens may be provided inside the casing body 102.

When the vehicle lighting device 61 is provided, the substrate 63 provided in the vehicle lighting device 61 is inserted into the socket 101. The socket terminals 101a and 101b are electrically connected to the connection pads 21e1, respectively.

### [Reference Signs List]

- 1: Vehicle lighting device
- 1a: Central axis
- 10: Light emitting portion
- 11: Substrate
- 11a: Surface
- 11b: Surface
- 12: Light emitting element
- 21: Substrate
- 21e: Wiring pattern
- 21e1: Connection pad
- 30: Optical element
- 30a: Central axis
- 30b1: Concave portion
- 30b1a-30b1d: Region
- 40: Housing
- 41: Accommodating portion
- 42: Insertion portion
- 50: Terminal
- 61: Vehicle lighting device
- 61a: Central axis
- 63: Substrate
- 100: Vehicle lamp
- 101: Socket
- 101a: Socket terminal
- 101b: Socket terminal

## Claims

1. An optical element (30) for a vehicle lighting device (1, 61) comprising a light emitting element (12),
wherein the optical element (30) is to be provided on a light emitting side of the light emitting element (12) and comprises:
a first concave portion (30b1, 130b1), provided on an end surface opposite to a light emitting element (12) side, with a dimension in a direction orthogonal to a central axis (1a, 30a, 61a, 130a) of the optical element (30) gradually decreasing toward the light emitting element (12) side; and
a pair of second concave portions (30c1, 130c1), provided on a side surface at point-symmetrical positions centered on the central axis (1a, 30a, 61a, 130a) of the optical element (30);
wherein a surface of the second concave portion (30c1, 130c1) on a central axis (1a, 30a, 61a, 130a) side of the optical element (30) is a curved surface protruding outward, and light emitted from the light emitting element (12) toward an end of the first concave portion (30b1, 130b1) on the light emitting element (12) side is emitted at a polar angle of about 0°,
light emitted from the light emitting element (12) toward a region of an inner wall of the first concave portion (30b1, 130b1) opposite to the light emitting element (12) side is emitted at a polar angle of 45°, and
light emitted from the light emitting element (12) toward a region of the inner wall of the first concave portion (30b1, 130b1) on the light emitting element (12) side is emitted through the curved surface of the second concave portion (30c1, 130c1) at a polar angle of about 100°.

2. The optical element (30) according to claim 1,
wherein a center of a radius of curvature of the curved surface of the second concave portion (30c1, 130c1) does not overlap the central axis (1a, 30a, 61a, 130a) of the optical element (30).

3. The optical element (30) according to claim 1 or 2, further comprising:
a plurality of concave curved surfaces arranged along the curved surface inside the second concave portion (30c1, 130cl).

4. The optical element (30) according to claim 1 or 2, further comprising:
a plurality of third concave portions (30b2), provided on a peripheral edge of the end surface opposite to the light emitting element (12) side,
wherein a position in a rotation direction of a region in which the plurality of third concave portions (30b2) are provided centered on the central axis (1a, 30a, 61a, 130a) of the optical element (30) is the same as a position in a rotation direction of the second concave portion (30c1, 130c1).

5. A vehicle lighting device (1, 61), comprising:
a light emitting element (12);
a first substrate (11), comprising a first surface on which the light emitting element (12) is provided and a second surface facing the first surface;
a second substrate (21), provided on the second surface of the first substrate (11) and extending in a direction substantially perpendicular to the second surface;
the optical element (30) according to claim 1, provided on a first surface side of the first substrate (11); and
a pair of connection pads (21e1), provided on the second substrate (21) and electrically connected to the light emitting element (12).

6. The vehicle lighting device (1, 61) according to claim 5, further comprising:
a housing (40), comprising an accommodating portion (41) and a plate-shaped insertion portion (42) provided at one end of the accommodating portion (41) and installed on a socket terminal (101a, 101b) of a socket (101) provided in a vehicle lamp (100); and
a pair of terminals (50), provided at a center of the insertion portion (42) in a width direction so as to sandwich a central axis (1a, 30a, 61a, 130a) of the vehicle lighting device (1, 61) in a thickness direction of the insertion portion (42),
wherein the second substrate (21) is provided inside the housing (40),
one end side of the pair of terminals (50) is electrically connected to the connection pad (21e1) inside the housing (40), and
the other end of the pair of terminals (50) is provided on a surface of the insertion portion (42) in a thickness direction outside the housing (40).

7. A vehicle lamp (100), comprising:
the vehicle lighting device (1, 61) according to claim 5 or 6; and
a socket (101), comprising a pair of socket terminals (101a, 101b) electrically connected to a pair of connection pads (21e1) provided on the vehicle lighting device (1, 61).

## Patentansprüche

1. Optisches Element (30) für eine Fahrzeugbeleuchtungsvorrichtung (1, 61), umfassend ein lichtemittierendes Element (12),
wobei das optische Element (30) zur Anordnung auf einer lichtemittierenden Seite des lichtemittierenden Elements (12) vorgesehen ist und umfasst:
einen ersten konkaven Abschnitt (30b1, 130b1), der auf einer Endfläche angeordnet ist, die einer Seite des lichtemittierenden Elements (12) gegenüberliegt, mit einer Abmessung in einer Richtung orthogonal zu einer Mittelachse (1a, 30a, 61a, 130a) des optischen Elements (30), die in Richtung der Seite des lichtemittierenden Elements (12) allmählich abnimmt; und
ein Paar zweiter konkaver Abschnitte (30c1, 130c1), die an einer Seitenfläche an punktsymmetrischen Positionen in Bezug auf die Mittelachse (1a, 30a, 61a, 130a) des optischen Elements (30) angeordnet sind;
wobei eine Oberfläche des zweiten konkaven Abschnitts (30c1, 130c1) auf einer Seite der Mittelachse (1a, 30a, 61a, 130a) des optischen Elements (30) eine nach außen vorstehende gekrümmte Oberfläche ist, und Licht, das von dem lichtemittierenden Element (12) in Richtung eines Endes des ersten konkaven Abschnitts (30b1, 130b1) auf der Seite des lichtemittierenden Elements (12) emittiert wird, wird in einem Polarwinkel von etwa 0 ° emittiert,
Licht, das von dem lichtemittierenden Element (12) in Richtung eines Bereichs einer Innenwand des ersten konkaven Abschnitts (30b1, 130b1) gegenüber der Seite des lichtemittierenden Elements (12) emittiert wird, wird in einem Polarwinkel von 45 ° emittiert, und
Licht, das von dem lichtemittierenden Element (12) in Richtung eines Bereichs der Innenwand des ersten konkaven Abschnitts (30b1, 130b1) auf der Seite des lichtemittierenden Elements (12) emittiert wird, wird durch die gekrümmte Oberfläche des zweiten konkaven Abschnitts (30c1, 130c1) mit einem Polarwinkel von etwa 100 ° emittiert.

2. Optisches Element (30) nach Anspruch 1,
wobei ein Mittelpunkt eines Krümmungsradius der gekrümmten Oberfläche des zweiten konkaven Abschnitts (30c1, 130c1) nicht mit der Mittelachse (1a, 30a, 61a, 130a) des optischen Elements (30) zusammenfällt.

3. Optisches Element (30) nach Anspruch 1 oder 2, ferner umfassend:
eine Vielzahl von konkaven gekrümmten Oberflächen, die entlang der gekrümmten Oberfläche innerhalb des zweiten konkaven Abschnitts (30c1, 130c1) angeordnet sind.

4. Optisches Element (30) nach Anspruch 1 oder 2, ferner umfassend:
eine Vielzahl von dritten konkaven Abschnitten (30b2), die an einer Umfangskante der Endfläche gegenüber der Seite des lichtemittierenden Elements (12) angeordnet sind,
wobei eine Position in einer Drehrichtung eines Bereichs, in dem die Vielzahl der dritten konkaven Abschnitte (30b2) angeordnet ist, mit einer Position in einer Drehrichtung des zweiten konkaven Abschnitts (30c1, 130c1) übereinstimmt, jeweils bezogen auf die Mittelachse (1a, 30a, 61a, 130a) des optischen Elements (30).

5. Fahrzeugbeleuchtungsvorrichtung (1, 61), umfassend:
ein lichtemittierendes Element (12);
ein erstes Substrat (11), das eine erste Oberfläche, auf der das lichtemittierende Element (12) bereitgestellt ist, und eine der ersten Oberfläche zugewandte zweite Oberfläche umfasst;
ein zweites Substrat (21), das auf der zweiten Oberfläche des ersten Substrats (11) bereitgestellt ist und sich in einer Richtung erstreckt, die im Wesentlichen senkrecht zu der zweiten Oberfläche ist;
das optische Element (30) nach Anspruch 1, das auf einer ersten Oberflächenseite des ersten Substrats (11) bereitgestellt ist; und
ein Paar von Kontaktpads (21e1), die auf dem zweiten Substrat (21) bereitgestellt sind und elektrisch mit dem lichtemittierenden Element (12) verbunden sind.

6. Fahrzeugbeleuchtungsvorrichtung (1, 61) nach Anspruch 5, ferner umfassend:
ein Gehäuse (40), das einen Aufnahmeabschnitt (41) und einen plattenförmigen Einsteckabschnitt (42) umfasst, der an einem Ende des Aufnahmeabschnitts (41) bereitgestellt ist und an einem Sockelkontakt (101a, 101b) eines in einer Fahrzeugleuchte (100) bereitgestellten Sockels (101) montiert ist; und
ein Paar Anschlüsse (50), die in einer Mitte des Einsteckabschnitts (42) in einer Breitenrichtung bereitgestellt sind, um eine Mittelachse (1a, 30a, 61a, 130a) der Fahrzeugbeleuchtungsvorrichtung (1, 61) in einer Dickenrichtung des Einsteckabschnitts (42) sandwichartig einzuschließen,
wobei das zweite Substrat (21) innerhalb des Gehäuses (40) bereitgestellt ist,
eine Endseite des Paares von Anschlüssen (50) elektrisch mit dem Kontaktpad (21e1) innerhalb des Gehäuses (40) verbunden ist und
das andere Ende des Paares von Anschlüssen (50) auf einer Oberfläche des Einsteckabschnitts (42) in einer Dickenrichtung außerhalb des Gehäuses (40) bereitgestellt ist.

7. Fahrzeugleuchte (100), umfassend:
die Fahrzeugbeleuchtungsvorrichtung (1, 61) nach Anspruch 5 oder 6; und
einen Sockel (101), der ein Paar Sockelkontakte (101a, 101b) umfasst, die elektrisch mit einem Paar Kontaktpads (21e1) verbunden sind, die an der Fahrzeugbeleuchtungsvorrichtung (1, 61) bereitgestellt sind.

## Revendications

1. Élément optique (30) pour un dispositif d'éclairage de véhicule (1, 61), comprenant un élément émetteur de lumière (12),
dans lequel l'élément optique (30) est prévu sur un côté émetteur de lumière de l'élément émetteur de lumière (12) et comprend :
une première partie concave (30b1, 130b1), prévue sur une surface d'extrémité opposée au côté de l'élément émetteur de lumière (12), dont la dimension dans une direction orthogonale à l'axe central (1a, 30a, 61a, 130a) de l'élément optique (30) diminue progressivement vers le côté de l'élément émetteur de lumière (12) ; et
une paire de deuxièmes parties concaves (30c1, 130c1), prévues sur une surface latérale à des positions symétriques ponctuelles centrées sur l'axe central (1a, 30a, 61a, 130a) de l'élément optique (30) ;
dans lequel une surface de la deuxième partie concave (30c1, 130c1) sur un côté de l'axe central (1a, 30a, 61a, 130a) de l'élément optique (30) est une surface courbe faisant saillie vers l'extérieur, et la lumière émise par l'élément émetteur de lumière (12) vers une extrémité de la première partie concave (30b1, 130b1) du côté de l'élément émetteur de lumière (12) est émise à un angle polaire d'environ 0°,
la lumière émise par l'élément émetteur de lumière (12) vers une région d'une paroi intérieure de la première partie concave (30b1, 130b1) opposée au côté de l'élément émetteur de lumière (12) est émise à un angle polaire de 45°, et la lumière émise par l'élément émetteur de lumière (12) vers une région de la paroi intérieure de la première partie concave (30b1, 130b1) sur le côté de l'élément émetteur de lumière (12) est émise à travers la surface courbe de la deuxième partie concave (30c1, 130c1) à un angle polaire d'environ 100°.

2. Élément optique (30) selon la revendication 1,
dans lequel le centre du rayon de courbure de la surface courbe de la deuxième partie concave (30c1, 130c1) ne chevauche pas l'axe central (1a, 30a, 61a, 130a) de l'élément optique (30).

3. Élément optique (30) selon la revendication 1 ou 2, comprenant en outre :
une pluralité de surfaces courbes concaves disposées le long de la surface courbe à l'intérieur de la deuxième partie concave (30c1, 130c1).

4. Élément optique (30) selon la revendication 1 ou 2, comprenant en outre :
une pluralité de troisièmes parties concaves (30b2), prévues sur un bord périphérique de la surface d'extrémité opposée au côté de l'élément émetteur de lumière (12),
dans lequel une position dans une direction de rotation d'une région dans laquelle la pluralité de troisièmes parties concaves (30b2) sont prévues centrées sur l'axe central (1a, 30a, 61a, 130a) de l'élément optique (30) est la même qu'une position dans une direction de rotation de la deuxième partie concave (30c1, 130c1).

5. Dispositif d'éclairage de véhicule (1, 61), comprenant :
un élément émetteur de lumière (12) ;
un premier substrat (11), comprenant une première surface sur laquelle est prévu l'élément émetteur de lumière (12) et une deuxième surface faisant face à la première surface ;
un deuxième substrat (21), prévu sur la deuxième surface du premier substrat (11) et s'étendant dans une direction sensiblement perpendiculaire à la deuxième surface ;
l'élément optique (30) selon la revendication 1, prévu sur un premier côté de surface du premier substrat (11) ; et
une paire de plots de connexion (21e1), prévus sur le deuxième substrat (21) et connectés électriquement à l'élément émetteur de lumière (12).

6. Dispositif d'éclairage de véhicule (1, 61) selon la revendication 5, comprenant en outre :
un boîtier (40), comprenant une partie de logement (41) et une partie d'insertion en forme de plaque (42) prévue à une extrémité de la partie de logement (41) et installée sur une borne de douille (101a, 101b) d'une douille (101) prévue dans une lampe de véhicule (100) ; et
une paire de bornes (50), prévues au centre de la partie d'insertion (42) dans le sens de la largeur de manière à prendre en sandwich un axe central (1a, 30a, 61a, 130a) du dispositif d'éclairage de véhicule (1, 61) dans le sens de l'épaisseur de la partie d'insertion (42), dans lequel le deuxième substrat (21) est prévu à l'intérieur du boîtier (40),
une extrémité de la paire de bornes (50) est connectée électriquement aux plots de connexion (21e1) à l'intérieur du boîtier (40), et
l'autre extrémité de la paire de bornes (50) est prévue sur une surface de la partie d'insertion (42) dans le sens de l'épaisseur à l'extérieur du boîtier (40) .

7. Lampe de véhicule (100), comprenant :
le dispositif d'éclairage de véhicule (1, 61) selon la revendication 5 ou 6 ; et
une douille (101), comprenant une paire de bornes de douille (101a, 101b) connectées électriquement à une paire de plots de connexion (21e1) prévus sur le dispositif d'éclairage de véhicule (1, 61).
